# EUROPEAN PATENT APPLICATION

(11) **EP 1 850 588 A1**
(43) Date of publication of application: **31.10.2007**
(21) Application number: 06713870.1
(22) Date of filing: 16.02.2006
(51) Int. Cl.: H04N 5/92, G11B 20/10, G11B 20/12, H04N 5/85, H04N 7/32

(54) **ENCODING DEVICE, ENCODING METHOD, AND COMPUTER PROGRAM FOR ENCODING**

(30) Priority: 17.02.2005 JP 2005040345
(71) Applicant: Pioneer Corporation, Tokyo 153-8654 (JP)
(72) Inventor: HORA, Takashi, anazono 4-chome, Tokorozawa-shi, Saitama (JP)
(74) Representative: Haley, Stephen
(86) International application number: PCT/JP2006/302729
(87) International publication number: WO 2006/088090

(57) **Abstract**

A closed GOP is arranged at a plurality of positions in a video data string (31) so that the closed GOP (32) can be recorded at the head of the recording area of the second layer of the two-layer recording disc (17) during dubbing.

## Description

### Technical Field

The present invention relates to an encoding apparatus for and an encoding method of encoding video data in accordance with the MPEG (Moving Picture Experts Group) standard, and a computer program for encoding.

### Background Art

There are three types of structures for the recording layer of a DVD-ROM (DVD Read Only Memory), which is a read-only DVD. That is, a single sided single layer type, a single sided dual layer type, and a double sided single layer each type. On the other hand, there are two types of structures for the recording layer of a DVD-R (DVD Recordable), which is a write-once type DVD. That is, a single sided single layer type and a double sided single layer each type. Now, a DVD-R of a single sided double layer type (hereinafter referred to as a "dual-layer DVD-R") is under development.

In general, a compression method according to the MPEG standard (hereinafter referred to a "MPEG method") is used when video images are recorded in a DVD video format. Under the MPEG method, video images are recorded as image data in each frame or field. The MPEG method employs a method in which certain image data is expressed by using a difference between the image data and past or future image data, i.e. predictive coding. Under the predictive coding, each image data is converted to any data of an I-picture (Intra-picture), a P-picture (Predictive-picture), and a B-picture (Bidirectionally predictive-picture), and it is then recorded.

MPEG video data is a video data string obtained by appending control information or management information to a plurality of image data, which are converted to any one of the I-picture, the P-picture, and the B-picture. The video data string can be divided into data groups, each of which is referred to as a GOP (Group Of Pictures). In other words, it can be said that the MPEG video data is a video data string in which a plurality of GOPs are arranged. Normally, one GOP includes 15 frames of image data.

The GOP includes an open GOP and a closed GOP. The open GOP includes the image data in which images cannot be reproduced completely without reference to the image data included in another GOP. The closed GOP does not include the image data in which images cannot be reproduced completely without reference to the image data included in another GOP. In other words, two B-pictures which are located at the head of the open GOP cannot be decoded without reference to the P-picture which is located in the tail of the previous GOP (or GOP located one before) of the GOP including the B-pictures. Therefore, it is necessary to refer to the previous GOP whenever the open GOP is decoded. In contrast, all the B-pictures and P-pictures included in the closed GOP can be decoded with reference to the I-picture or P-picture included in the GOP including the aforementioned B-pictures and P-pictures. Therefore, normally, it is unnecessary to refer to another GOP when the closed GOP is decoded.

When video images are recorded onto a DVD-R of a single sided single layer type in the DVD video format and the MPEG method, normally, only the GOP located at the head of the MPEG video data is set as the closed GOP, and all the subsequent GOPs are set as the open GOPs.

### Disclosure of Invention

### Subject to be Solved by the Invention

Currently, a DVD recorder with a built-in hard disk drive is widespread. The DVD recorder can receive video data transmitted by television broadcast or the like and record the received video data (hereinafter referred to "received video data") onto a hard disk by using the built-in hard disk drive. Moreover, such a DVD recorder has a function of reading the video data recorded on the hard disk and a function of recording it onto a DVD-R or other write-once type or rewritable type DVDs. That is, a dubbing (or copy) function.

When the dual-layer DVD-R is provided in the market, it is desired to provide the functions of reading the video data recorded on the hard disk and continuously recording it onto the dual-layer-DVD-R for the DVD recorder with a built-in hard disk drive. The single sided single layer DVD-R has a recording capacity of 4.7GB. In contrast, the dual-layer DVD-R has a recording capacity of 8.5GB. Therefore, the provision of the function of continuously recording the video data onto the dual-layer DVD-R allows prolonged video contents to be stored on one recording disk.

There is, however, the following problem in order to realize the function of continuously recording the video data onto the dual-layer DVD-R. That is, on the DVD recorder with a built-in hard disk drive, the received video data is encoded to the MPEG video data by an encoder apparatus disposed in the DVD recorder. Then, the MPEG video data is recorded onto the hard disk by the built-in hard disk drive. At this time, in the MPEG video data encoded by the encoder apparatus, only the GOP located at the head of the MPEG video data is the closed GOP, and all the subsequent GOPs are the open GOPs. When the video data which is recorded on the hard disk in the MPEG method and whose data size is greater than the recording capacity of a first layer (layer 0) of the dual-layer DVD-R is read from the hard disk and is continuously recorded onto an unused dual-layer DVD-R, a change in the recording layer (hereinafter referred to as a "layer-change / layer-jump") is made in the middle of the recording process. As a result, the video data of the open GOP is recorded into the head of a recording area of a second layer (layer 1). As described above, the two B-pictures which are located at the head of the open GOP cannot be decoded without reference to the P-picture which is located in the tail of the previous GOP of the GOP including the B-pictures. Therefore, in order to decode the GOP recorded at the head of the recording area in the second layer, it is necessary to make the layer-change and refer to the GOP located in the tail of the video data recorded in the first layer. However, making the layer-change again reduces swiftness and continuity of the decoding process. As a result, there possibly arises a problem that reproduced video images are temporarily stopped (or frozen) upon the layer-change.

On the other hand, in order to maintain the swiftness and continuity of the decoding process, it is also considered that the decoding process is forced to be continued with disregard to the undecodability of the two B-pictures located at the head of the recording area in the second layer. Performing such a process, however, causes a lack of video images immediately after the layer-change, resulting in a disturbance of the reproduced video images.

In order to solve the above-exemplified problems, it is therefore a first object of the present invention to provide an encoding apparatus, an encoding method, a computer program for encoding, a recording apparatus, and a recording medium, which can realize quick and complete decoding of video data, which is continuously recorded on a write-once or rewritable type recording disk with two or more recording layers on a single side, such as a dual-layer DVD-R.

It is a second object of the present invention to provide an encoding apparatus, an encoding method, a computer program for encoding, a recording apparatus, and a recording medium, which can prevent, upon the layer-change, a lack of the partial reproduced video images of video data, which is continuously recorded on a write-once or rewritable type recording disk with two or more recording layers on a single side.

It is a third object of the present invention to provide an encoding apparatus, an encoding method, a computer program for encoding, a recording apparatus, and a recording medium, which can prevent, upon the layer-change, a disturbance of the reproduced video images of video data, which is continuously recorded on a write-once or rewritable type recording disk with two or more recording layers on a single side.

### Means for Solving the Object

The above object of the present invention can be achieved by a first encoding apparatus for encoding first video data to thereby generate second video data, the encoding apparatus provided with: a receiving device for receiving the first video data; an encoding device for generating a video data string on the basis of the first video data, the video data string including a plurality of independent data groups and a plurality of dependent data groups which are arranged in a predetermined order, each of the independent data groups having a plurality of image data which do not include image data in which images cannot be reproduced completely without reference to image data included in another data group, each of the dependent data groups having a plurality of image data which include image data in which images cannot be reproduced completely without reference to image data included in another data group; and an outputting device for outputting the video data string generated by the encoding device as the second video data, the encoding device generating the video data string to dispose one independent data group at intervals of one or more dependent data groups.

The above object of the present invention can be also achieved by a first computer program for making a computer function as the first encoding apparatus of the present invention.

The above object of the present invention can be also achieved by a first recording apparatus provided with: the first encoding apparatus of the present invention; and a recording device for recording the second video data outputted by the outputting device of the encoding apparatus, onto a recording medium.

The above object of the present invention can be also achieved by a first encoding method of encoding first video data to thereby generate second video data, the encoding method provided with: a receiving process of receiving the first video data; an encoding process of generating a video data string on the basis of the first video data, the video data string including a plurality of independent data groups and a plurality of dependent data groups which are arranged in a predetermined order, each of the independent data groups having a plurality of image data which do not include image data in which images cannot be reproduced completely without reference to image data included in another data group, each of the dependent data groups having a plurality of image data which include image data in which images cannot be reproduced completely without reference to image data included in another data group; and an outputting process of outputting the video data string generated by the encoding process as the second video data, the encoding process generating the video data string to dispose one independent data group at intervals of one or more dependent data groups.

The above object of the present invention can be also achieved by a first recording medium on which a video data string is recorded, the video data string including a plurality of data groups which are arranged in a predetermined order, each of the data groups including a plurality of image data which constitute video data, wherein the plurality of data groups includes a plurality of independent data groups and a plurality of dependent data groups, each of the independent data groups having a plurality of image data which do not include image data in which images cannot be reproduced completely without reference to image data included in another data group, each of the dependent data groups having a plurality of image data which include image data in which images cannot be reproduced completely without reference to image data included in another data group, and one independent data group is disposed at intervals of one or more dependent data groups in the video data string.

The above object of the present invention can be also achieved by a second encoding apparatus for encoding first video data in accordance with a MPEG (Moving Picture Experts Group) standard to thereby generate second video data having a plurality of GOPs (Group Of Pictures), the encoding apparatus provided with: a receiving device for receiving the first video data; an encoding device for generating a video data string on the basis of the first video data, the video data string including a plurality of closed GOPs and a plurality of open GOPs which are arranged in a predetermined order; and an outputting device for outputting the video data string generated by the encoding device as the second video data, the encoding device generating the video data string to dispose one closed GOP at intervals of one or more open GOPs.

The above object of the present invention can be also achieved by a second computer program for making a computer function as the second encoding apparatus of the present invention.

The above object of the present invention can be also achieved by a second recording apparatus provided with: the second encoding apparatus of the present invention; and a recording device for recording the second video data outputted by the outputting device of the encoding apparatus, onto a recording medium.

The above object of the present invention can be also achieved by a second encoding method of encoding first video data in accordance with a MPEG standard to thereby generate second video data having a plurality of GOPs (Group of pictures), the encoding method provided with: a receiving process of receiving the first video data; an encoding process of generating a video data string on the basis of the first video data, the video data string including a plurality of closed GOPs and a plurality of open GOPs which are arranged in a predetermined order; and an outputting process of outputting the video data string generated by the encoding process as the second video data, the encoding process generating the video data string to dispose one closed GOP at intervals of one or more open GOPs.

The above object of the present invention can be also achieved by a second recording medium on which a MPEG video data string is recorded, the video data string including a plurality of GOPs (Group of pictures) which are arranged in a predetermined order, each of the GOPs including a plurality of image data which constitute video data, wherein the plurality of GOPs includes a plurality of closed GOPs and a plurality of open GOPs, and one closed GOP is disposed at intervals of one or more open GOPs in the video data string.

The above object of the present invention can be also achieved by a first computer program product in a computer-readable medium for tangibly embodying a program of instructions executable by a computer, to make the computer function as the first encoding apparatus of the preset invention. The above object of the present invention can be also achieved by a second computer program product in a computer-readable medium for tangibly embodying a program of instructions executable by a computer, to make the computer function as the second encoding apparatus of the preset invention.

According to each of the computer program products of the present invention, the aforementioned first or second encoding apparatus of the present invention can be embodied relatively readily, by loading the computer program product from a recording medium for storing the computer program product, such as a ROM (Read Only Memory), a CD-ROM (Compact Disc - Read Only Memory), a DVD-ROM (DVD Read Only Memory), a hard disk or the like, into the computer, or by downloading the computer program product, which may be a carrier wave, into the computer via a communication device. More specifically, the computer program product may include computer readable codes to cause the computer (or may comprise computer readable instructions for causing the computer) to function as the aforementioned first or second encoding apparatus of the present invention.

### Brief Description of Drawings

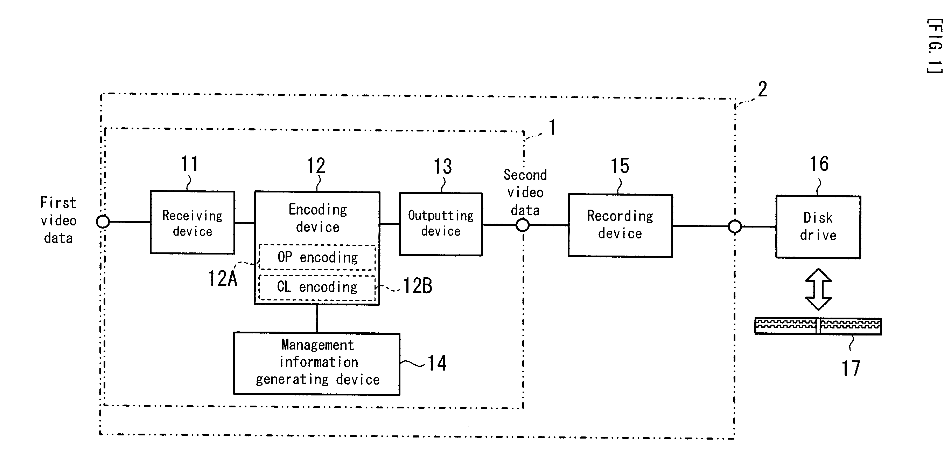

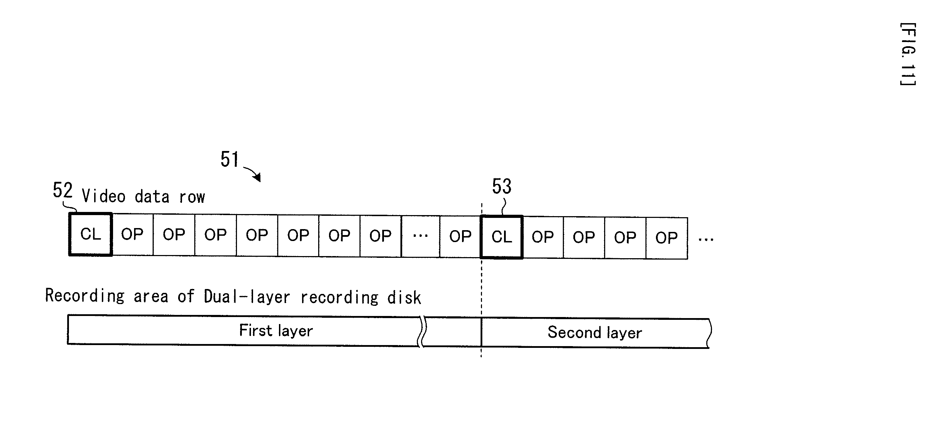

[FIG. 11] FIG. 1 is a block diagram showing a first embodiment of the encoding apparatus and the recording apparatus of the present invention.
[FIG. 2] FIG. 2 is an explanatory diagram showing a video data string generated by an encoding device in the first embodiment of the encoding apparatus of the present invention.
[FIG. 3] FIG. 3 is an explanatory diagram showing management information generated by a management information generating device in the first embodiment of the encoding apparatus of the present invention.
[FIG. 4] FIG. 4 is an explanatory diagram showing one example of a correspondence relationship between the video data string and the recording area of a dual-layer recording disk.
[FIG. 5] FIG. 5 is an explanatory diagram showing another example of the correspondence relationship between the video data string and the recording area of the dual-layer recording disk.
[FIG. 6] FIG. 6 is an explanatory diagram showing a video data string generated by the encoding device in a second embodiment of the encoding apparatus of the present invention.
[FIG. 7] FIG. 7 is an explanatory diagram showing a video data string generated by the encoding device in a third embodiment of the encoding apparatus of the present invention.
[FIG. 8] FIG. 8 is an explanatory diagram showing a video data string generated by the encoding device in a fourth embodiment of the encoding apparatus of the present invention.
[FIG. 9] FIG. 9 is an explanatory diagram showing a video data string generated by the encoding device in a fifth embodiment of the encoding apparatus of the present invention.
[FIG. 10] FIG. 10 is a block diagram showing a sixth embodiment of the encoding apparatus of the present invention.
[FIG. 11] FIG. 11 is an explanatory diagram showing one example of a correspondence relationship between a video data string generated by the encoding device in the sixth embodiment of the encoding apparatus of the present invention and the recording area of the dual-layer recording disk.
[FIG. 12] FIG. 12 is a block diagram showing a modified example of the sixth embodiment of the encoding apparatus of the present invention.
[FIG. 13] FIG. 13 is a block diagram showing a DVD recorder with a built-in hard disk, which is an embodiment of the encoding apparatus and the recording apparatus of the present invention.
[FIG. 14] FIG. 14 is a flowchart showing an encoding process in the embodiments of the present invention.

### Description of Reference Codes

- 1,41,61: encoding apparatus
- 2: recording apparatus
- 11: receiving device
- 12: encoding device
- 13: outputting device
- 14: management information generating device
- 15: recording device
- 21, 31, 51: video data string
- 22, 52, 53: closed GOP
- 23: open GOP
- 25: management information
- 42: position determining device
- 62: specifying device

### Best Mode for Carrying Out the Invention

Hereinafter, the embodiments of the present invention will be explained in each embodiment with reference to the drawings.

### (Encoding apparatus 1)

FIG. 1 shows a first embodiment of the encoding apparatus of the present invention. In FIG. 1, an encoding apparatus 1 is an apparatus for encoding video data supplied from the exterior (hereinafter referred to as "first video data") to thereby generate video data suitable for predetermined application or purpose (hereinafter referred to as "second video data"). For example, the encoding apparatus 1 is applied to a MPEG encoding apparatus for encoding the first video data, transmitted through a television broadcast station or the like, in accordance with a compression method according to the MPEG standard, i.e. the MPEG method, to thereby generate the second video data in the MPEG method. Hereinafter, for convenience of explanation, an explanation will be given under the assumption that the encoding apparatus 1 is applied to the MPEG encoding apparatus.

The encoding apparatus 1 is provided to the market with being mounted on a hard disk recorder, which records video data supplied from the exterior onto a hard disk by using a hard disk drive, or on a disk recorder, which records video data supplied from the exterior onto a recording disk. More specifically, the encoding apparatus 1 is provided to the market with being mounted on a DVD recorder with a built-in hard disk drive or the like. Incidentally, the encoding apparatus 1 can be also mounted on a general-purpose computer or an apparatus aimed at a specialized field, such as medical care, measurement, and automatic control. The encoding apparatus 1 can be also provided to the market as an independent article of manufacture for encoding only.

As shown in FIG. 1, the encoding apparatus 1 is provided with: a receiving device 11; an encoding device 12; an outputting device 13; and a management information generating device 14. A recording device 15 is connected to the encoding apparatus 1 on its output side. The encoding apparatus 1 constitutes a recording apparatus 2 with the recording device 15.

The receiving device 11 receives the first video data transmitted through a television broadcast station or the like. The receiving device 11 is equipped with an input terminal, an interface circuit, and the like. Incidentally, the interface circuit may be provided if necessary, and this may not be provided.

The encoding device 12 generates a video data string in which independent data groups and dependent data groups are arranged in a predetermined order, on the basis of the first video data. In the encoding process by the encoding device 12, the first video data is divided into frames or fields of image data. Then, several or several dozens of image data are grouped into one data group. In the encoding process, two types of data groups are generated, namely, the independent data group and the dependent data group. The independent data group has a plurality of image data which do not include the image data in which images cannot be reproduced completely without reference to the image data included in another data group. In contrast, the dependent data group has a plurality of image data which include the image data in which images cannot be reproduced completely without reference to the image data included in another data group.

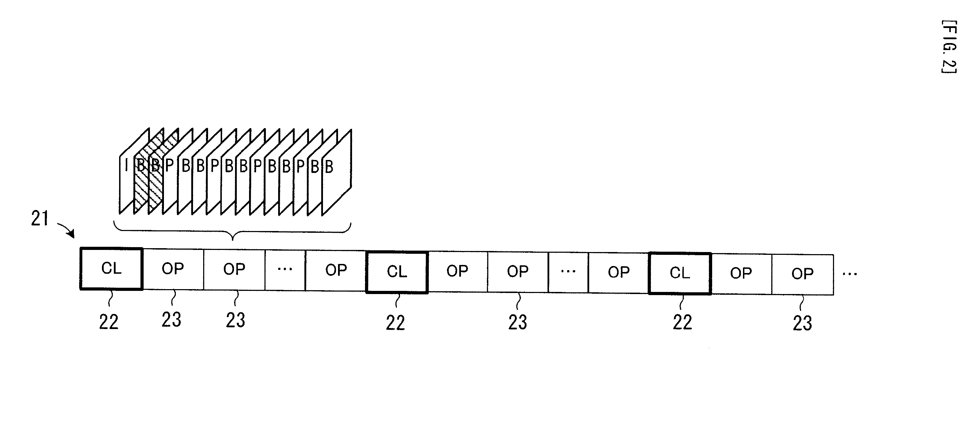

If the encoding apparatus 1 is applied to the MPEG encoding apparatus, the encoding device 12 encodes the first video data in accordance with the MPEG method, to thereby generate a video data string in which closed GOPs and open GOPs are arranged in a predetermined order. In this case, the closed GOP is a specific example of the independent data group, and the open GOP is a specific example of the dependent data group. In other words, in the encoding process in the MPEG method, the first video data, transmitted from a television broadcast station or the like, is converted to any image data of the I-picture, the P-picture, and the B-picture, under predictive coding. Then, for example, 15 frames of the converted image data are grouped into one GOP (refer to FIG. 2). Moreover, in the encoding process in the MPEG method, two types of GOPs are generated, namely, the closed GOP and the open GOP The open GOP includes the image data in which images cannot be reproduced completely without reference to the image data included in another GOP In other words, two B-pictures which are located at the head of the open GOP cannot be decoded without reference to the P-picture which is located in the tail of the previous GOP (or GOP located one before) of the GOP including the B-pictures. Therefore, it is necessary to refer to the previous GOP whenever the open GOP is decoded. In contrast, the closed GOP does not include the image data in which images cannot be reproduced completely without reference to the image data included in another GOP. In other words, all the B-pictures and P-pictures included in the closed GOP can be decoded with reference to the 1-picture or P-picture included in the GOP including the aforementioned B-pictures and P-pictures. Therefore, normally, it is unnecessary to refer to another GOP when the closed GOP is decoded.

The encoding device 12 generates the video data string to dispose one closed GOP at intervals of one or more open GOPs. The details of the video data string will be described later by using FIG. 2.

The encoding device 12, as shown in FIG. 1, has a device 12A for generating the closed GOP (an independent data unit generating device) and a device 12B for generating the open GOP (a dependent data unit generating device). The encoding device 12 can be realized by an arithmetic processing circuit, a semiconductor memory, and the like.

The outputting device 13 outputs the video data string generated by the encoding device 12 as the second video data. As shown in FIG. 1, the encoding apparatus 1 is connected, on its output side, to the recording device 15, and the outputting device 13 outputs the second video data to the recording device 15. The outputting device 13 is equipped with an output terminal, an interface circuit, and the like. Incidentally, the interface circuit may be provided if necessary, and this may not be provided. Moreover, for example, if the outputting device 13 and the recording device 15 are connected through a bus, the bus also constitutes one portion of the outputting device 13.

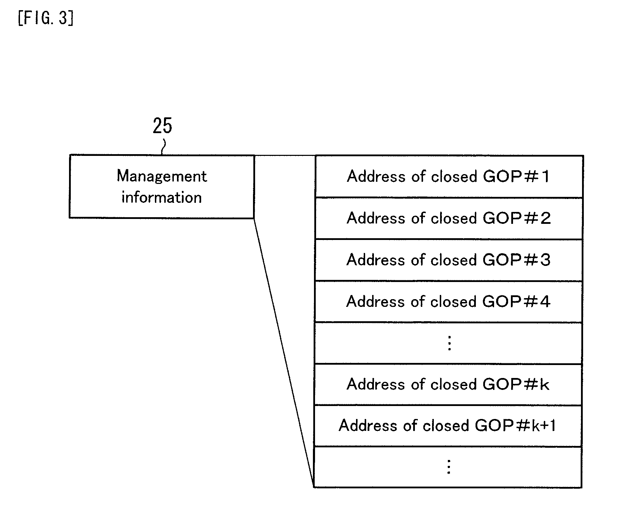

The management information generating device 14 generates management information which indicates a position in which the closed GOP is disposed in the video data string generated by the encoding device 12. The management information is outputted by the outputting device 13 as the second video data together with the video data string generated by the encoding device 12. That is, the management information constitutes one portion of the second video data. The details of the management information will be descried later by using FIG. 3. The management information generating device 14 can be realized by an arithmetic processing circuit, a semiconductor memory, and the like.

The recording device 15 records the second video data outputted by the outputting device 13 of the encoding apparatus 1, onto a recording medium. The recording medium is a write-once or rewritable type recording medium. Moreover, the recording medium desirably has a large recording capacity, namely, a capacity high enough to record the second video data of 8.5GB or more. The recording device 15 is desirably a hard disk drive, and the recording medium is desirably a hard disk built in the hard disk drive.

The encoding apparatus 1 operates as follows. When the first video data is transmitted from a television broadcast station or the like, the receiving device 11 receives the first video data and outputs it to the encoding device 12. The encoding device 12 receives the first video data, encodes it, and outputs the video data string which is generated through the encoding, to the outputting device 13. Moreover, the management information generating device 14 generates the management information and outputs it to the outputting device 13. The outputting device 13 outputs the video data string generated by the encoding device 12, with the management information generated by the management information generating device 14, as the second video data. The recording device 15 receives the second video data and records it onto the recording medium. Incidentally, FIG. 1 shows a disk drive 16 connected to the recording apparatus 2, and a dual-layer recording disk 17. These will be described later.

Next, FIG. 2 shows the video data string generated by the encoding device 12. In FIG. 2, "CL" means the closed GOP, and "OP" means the open GOP. As shown in FIG. 2, the encoding device 12 disposes a closed GOP 22 at the head of a video data string 21 and then disposes an open GOP 23. Then, the encoding device 12 arranges open GOPs 23 and closed GOPs 22 to dispose one closed GOP 22 at intervals of one or more open GOPs 23.

The encoding device 12 disposes one closed GOP 22 at intervals of one or more open GOPs 23, as described above. Therefore, the encoding device 12 may dispose one closed GOP 22 at intervals of ten open GOPs 23, or a hundred or five hundred open GOPs 23.

Next, FIG. 3 shows the management information generated by the management information generating device 14. As shown in FIG. 3, management information 25 is information indicating the relative address of each closed GOP arranged in the video data string. Incidentally, the management information is not necessarily limited to the information indicating the relative address of each closed GOP. For example, the management information may be information indicating the order of each closed GOP as long as each closed GOP has a constant arrangement interval and the interval can be known. Moreover, the management information may be information indicating what number each GOP is from the head of the video data string. The management information may be also information indicating a time point at which the image data included in each closed GOP is reproduced if the second video data is reproduced. More specifically, the management information is desirably information having an arrangement and structure which are similar to those of the control information, such as a time entry, an entry point, and a VOBU entry, in a DVD-VR (DVD Video Recording) standard. Moreover, the management information may be realized by additionally recording (or writing once) information which indicates the position of each closed GOP onto the control information or the like defined in the existing standard, such as the MPEG standard and the DVD video standard. According to this method, it is possible to prevent an increase in data size of the second video data.

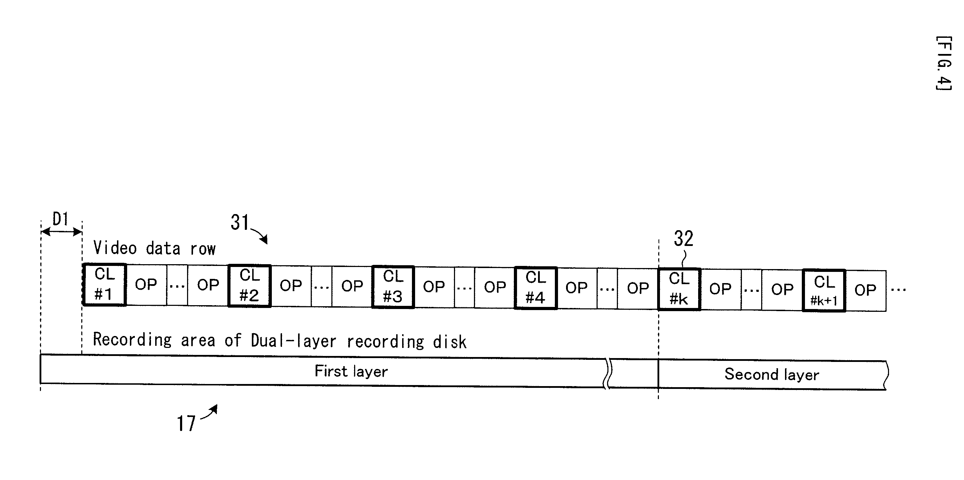

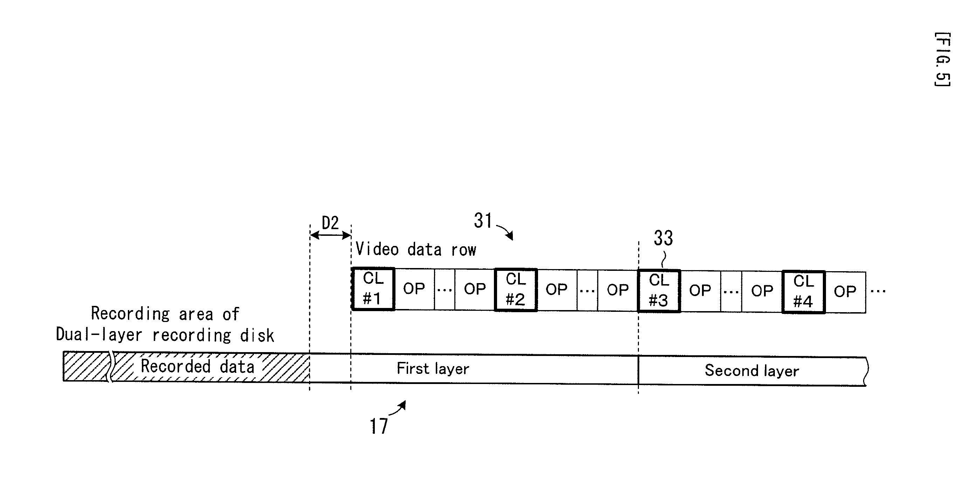

Consequently, according to the encoding apparatus 1, it is adapted to generate the video data string to dispose one closed GOP (i.e. independent data group) at intervals of one or more open GOPs (i.e. dependent data groups). Thus, the following advantageous effects can be achieved. Hereinafter, desirable use aspects by the encoding apparatus 1 and their advantageous effects will be discussed by using FIG. 4 and FIG. 5.

FIG. 4 shows one example of a correspondence relationship between the video data string generated by the encoding device 12 and the recording area of a dual-layer recording disk. Now it is assumed that a video data string 31 generated by the encoding device 12 is read from the recording device 15 and is recorded onto the dual-layer recording disk; namely, it is assumed that the video data string 31 is dubbed or copied onto the dual-layer recording disk. For example, as shown in FIG. 1, the disk drive 16 for the dual-layer recording disk is connected to the recording apparatus 2. The video data string 31 is read from the recording device 15 and is outputted to the dual-layer recording disk drive 16. The video data string 31 is recorded onto the dual-layer recording disk 17 by the dual-layer recording disk drive 16. Incidentally, the dual-layer recording disk 17 is, for example, a dual-layer DVD-R or the like. At this time, it is assumed that the video data string 31 is one title (e.g. one continuous video content) and that its data size is greater than the recording capacity of a first layer 17A (layer 0) of the dual-layer recording disk 17. For example, it is assumed that the data size of the video data string is greater than 4.7GB and is approximately 5 to 8GB if the dual-layer recording disk 17 is a dual-layer DVD-R.

It is assumed that such a large size of video data string 31 is continuously recorded from the head of a recording area in the first layer of the unused dual-layer recording disk 17 throughout the recording area of a second layer (layer 1). In this case, the correspondence relationship between the video data string 31 and the dual-layer recording disk 17 is adjusted to record the closed GOP at the head of the recording area in the second layer of the dual-layer recording disk 17. This adjustment can be achieved, for example, by shifting a recording start position of the head of the video data string 31 backward from the head of the first layer of the dual-layer recording disk 17. Since the plurality of closed GOPs are arranged in the video data string 31, it is only slightly to shift the recording start position of the head of the video data string 31. For example, as shown in FIG. 4, by shifting the recording start position of the head of the video data string 31 slightly by D1, the recoding position of the k-th closed GOP 32 matches the head of the recording area in the second layer of the dual-layer recording disk 17. By this, the k-th closed GOP 32 is recorded into the head of the recording area in the second layer of the dual-layer recording disk 17.

As described above, the closed GOP can be decoded without reference to another GOP. Therefore, even if the layer-change is made when the video data string 31 recorded on the dual-layer recording disk 17 is decoded (or reproduced), it is possible to achieve quick and complete decoding and it is possible to prevent a lack of one portion of the reproduced video images upon the layer-change. As a result, it is possible to prevent a disturbance of the reproduced video images immediately after the layer-change.

Next, FIG. 5 shows another example of the correspondence relationship between the video data string generated by the encoding device 12 and the recording area of the dual-layer recording disk. Here, it is also assumed that the video data string 31 generated by the encoding device 12 is read from the recording device 15 and is recorded onto the dual-layer recording disk 17; namely, it is assumed that the video data string 31 is dubbed or copied onto the dual-layer recording disk 17. In FIG. 5, however, other data is already recorded from the head position of the recording area in the first layer of the dual-layer recording disk 17 to the middle of the recording area. In such a circumstance, it is assumed that the video data string 31 is continuously recorded from the middle of the recording area in the first layer of the dual-layer recording disk throughout the recording area of the second layer. Even in this case, the correspondence relationship between the video data string 31 and the dual-layer recording disk 17 is adjusted to record the closed GOP at the head of the recording area in the second layer of the dual-layer recording disk 17. This adjustment can be achieved, for example, by shifting a recording start position of the head of the video data string 31 backward from the head of a space area in the recording area of the first layer of the dual-layer recording disk 17. Since the plurality of closed GOPs are arranged in the video data string 31, it is only slightly to shift the recording start position of the head of the video data string 31. For example, as shown in FIG. 5, by shifting the recording start position of the head of the video data string 31 slightly by D2, the recoding position of the third closed GOP 33 matches the head of the recording area in the second layer of the dual-layer recording disk 17. By this, the third closed GOP 33 is recorded into the head of the recording area in the second layer of the dual-layer recording disk 17.

By this, even if the layer-change is made when the video data string 31 recorded on the dual-layer recording disk 17 is decoded (or reproduced), it is possible to achieve quick and complete decoding and it is possible to prevent a lack of one portion of the reproduced video images upon the layer-change. As a result, it is possible to prevent a disturbance of the reproduced video images immediately after the layer-change.

Moreover, according to the encoding apparatus 1, the following advantageous effects can be achieved. That is, according to the encoding apparatus 1, since the video data string is generated to dispose one closed GOP at intervals of one or more open GOPs, the data size of the video data string can be reduced than that in the case that all the video data strings are set as the closed GOPs.

Moreover, the management information is referred to when the correspondence relationship between the video data string and the recording area of the dual-layer recording disk is adjusted to record the closed GOP at the head of the recording area in the second layer of the dual-layer recording disk. The management information is the information indicating the position of each closed GOP. Therefore, with reference to the management information, it is possible to find the closed GOP located close to the head of the recording area in the second layer of the dual-layer recording disk, to thereby easily and accurately determine the amount of shifting the recording start position of the head of the video data.

### (Encoding Apparatus 2)

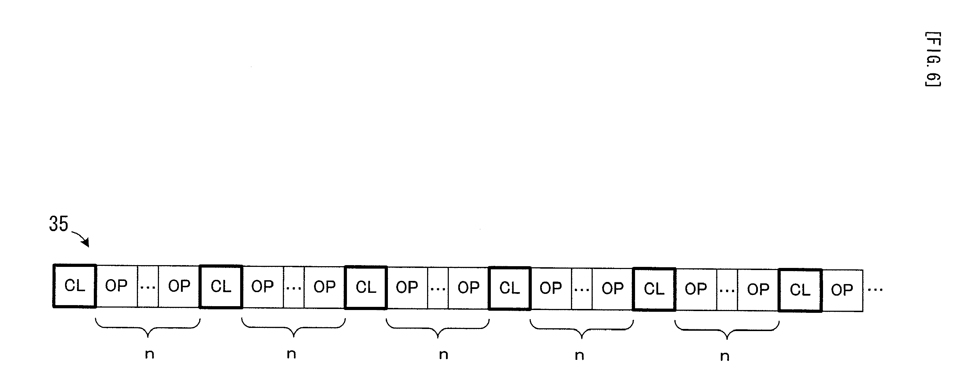

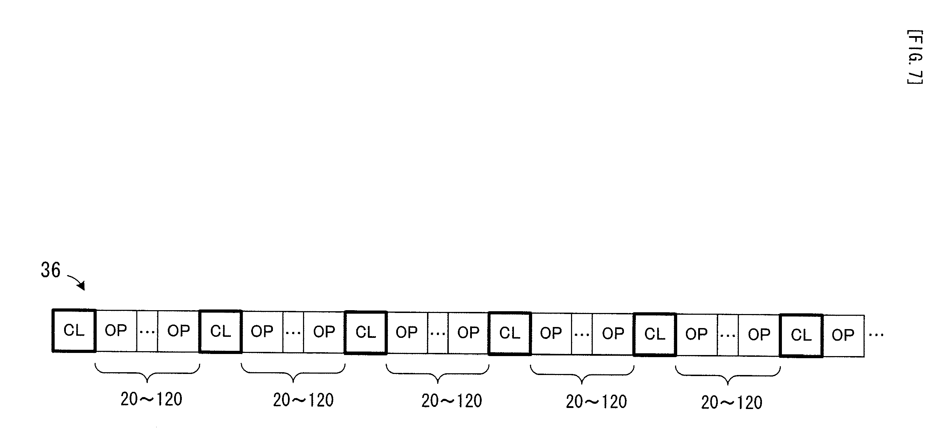

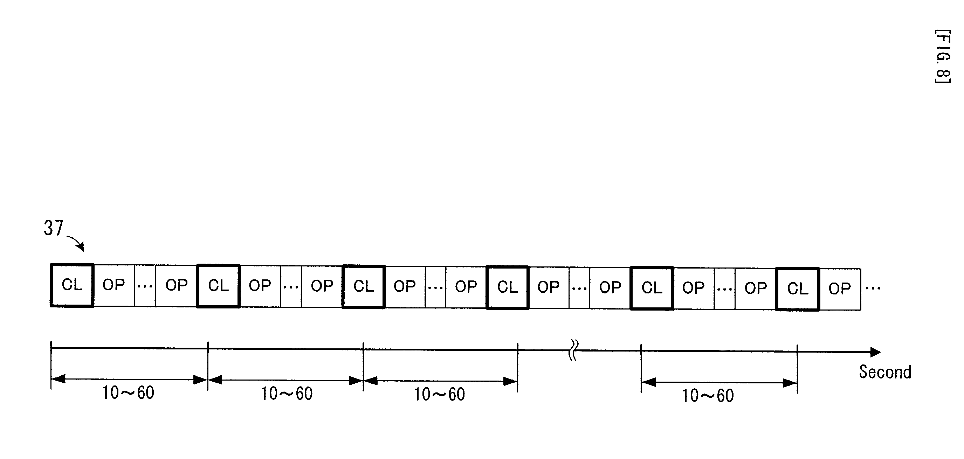

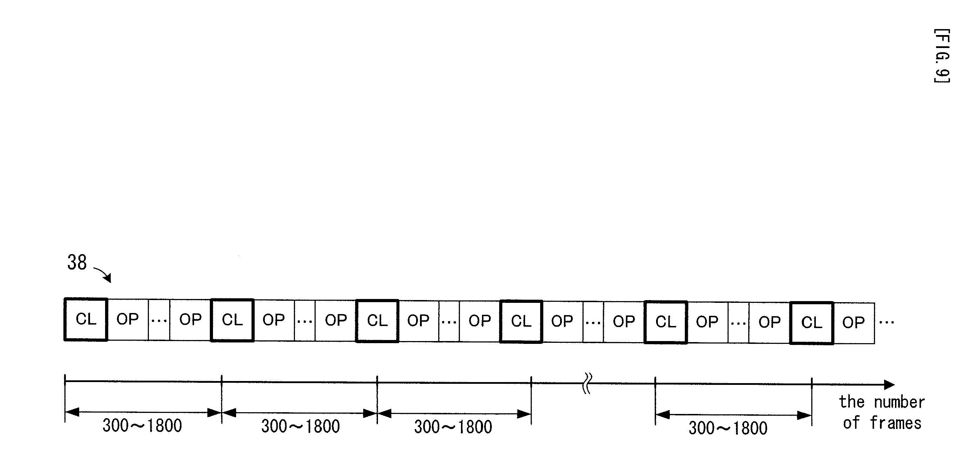

FIG. 6 shows a video data string generated by a second embodiment of the encoding apparatus of the present invention. As shown in FIG. 6, on the second embodiment of the encoding apparatus of the present invention, the encoding device generates a video data string 35 to dispose one closed GOP (i.e. independent data group) at intervals of n open GOPs (i.e. dependent data group) (wherein n is an integer of 1 or more). The number of the open GOPs existing between the closest two closed GOPs is not always constant in the video data string 21 shown in FIG. 2, a video data string 36 shown in FIG. 7, a video data string 37 shown in FIG. 8, and a video data string 38 shown in FIG. 9. In contrast, the number of the open GOPs existing between the closest two closed GOPs is always constant in the video data string 35 shown in FIG. 6. This allows the achievement of the same advantageous effects as those of the encoding apparatus 1 in the aforementioned first embodiment.

### (Encoding Apparatus 3)

FIG. 7 shows a video data string generated by a third embodiment of the encoding apparatus of the present invention. As shown in FIG. 7, on the third embodiment of the encoding apparatus of the present invention, the encoding device generates the video data string 36 to dispose one closed GOP (i.e. independent data group) at intervals of about 20 to 120 open GOPs (i.e. dependent data group).

As described above, the correspondence relationship between the video data string and the dual-layer recording disk is adjusted to record the closed GOP at the head of the recording area in the second layer of the dual-layer recording disk when the video data string recorded by the recording device 15 is dubbed or copied onto the dual-layer recording disk. At this time, the recording start position of the head of the video data string is shifted. It is possible to reduce the amount of shifting the recording start position of the head of the video data string (e.g. D1 in FIG. 4 and D2 in FIG. 5) by increasing the number of the closed GOPs disposed in the video data string. However, increasing the number of the closed GOPs disposed in the video data string causes an increase in data size of the video data string. Thus, by disposing one closed GOP at intervals of about 20 to 120 open GOPs, it is possible to reduce the amount of shifting the recording start position of the head of the video data string during the dubbing or copying and to prevent the increase in data size of the video data string.

### (Encoding Apparatus 4)

FIG. 8 shows a video data string generated by a fourth embodiment of the encoding apparatus of the present invention. As shown in FIG. 8, on the fourth embodiment of the encoding apparatus of the present invention, the encoding device generates the video data string 37 in which the closed GOPs (i.e. independent data groups) are arranged so that the closed GOP (i.e. independent data group) includes image data corresponding to video images which are reproduced at about 10 to 60 second intervals when the second video data is reproduced. This allows the achievement of the same advantageous effects as those of the encoding apparatus 1 in the aforementioned third embodiment.

### (Encoding Apparatus 5)

FIG. 9 shows a video data string generated by a fifth embodiment of the encoding apparatus of the present invention. As shown in FIG. 9, on the fifth embodiment of the encoding apparatus of the present invention, the encoding device generates the video data string 38 in which the closed GOPs (i.e. independent data groups) are arranged so that the closed GOP (i.e. independent data group) includes image data corresponding to video images which are reproduced at about 300 to 1800 frame intervals when the second video data is reproduced. This allows the achievement of the same advantageous effects as those of the encoding apparatus 1 in the aforementioned third embodiment.

### (Encoding Apparatus 6)

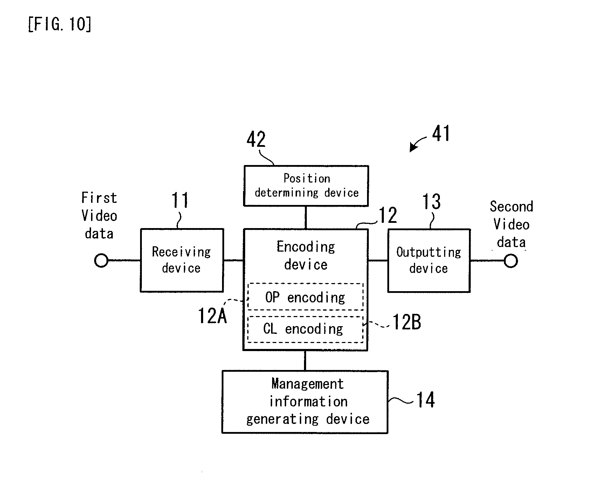

FIG. 10 shows a sixth embodiment of the encoding apparatus of the present invention. As shown in FIG. 10, an encoding apparatus 41 has a position determining device 42 added to the encoring apparatus 1. The position determining device 42 determines a position in which the closed GOP (i.e. independent data group) is to be inserted to the video data string, on the basis of the size of a space area in the first layer of the dual-layer recording disk, namely, the size of an unrecorded area out of the recording area of the first layer. The encoding device 12, as shown in FIG. 11, inserts a closed GOP 52 in the head position of a video data string 51 and inserts a closed GOP 53 in the insertion position determined by the position determining device 42.

The position determining device 42 determines the position in which the closed GOP 53 is to be inserted to the video data string, so as to record the closed GOP 53 at the head of the recording area in the second layer of the dual-layer recording disk during the dubbing or copying, on the basis of the size of the space area in the first layer of the dual-layer recording disk onto which the video data string 51 is dubbed or copied. Therefore, during the actual dubbing or copying, the closed GOP 53 is recorded into the head of the recording area in the second layer of the dual-layer recording disk.

The encoding apparatus in the sixth embodiment demonstrates the following advantageous effects if the space area is clarified in advance in the first layer of the dual-layer recording disk onto which the video data string is dubbed or copied. That is, since the closed GOP 53 can be recorded into the head of the recording area in the second layer of the dual-layer recording disk, even if the layer-change is made when the video data string 51 recorded on the dual-layer recording disk is decoded (or reproduced), it is possible to achieve quick and complete decoding and it is possible to prevent a lack of one portion of the reproduced video images upon the layer-change. As a result, it is possible to prevent a disturbance of the reproduced video images immediately after the layer-change.

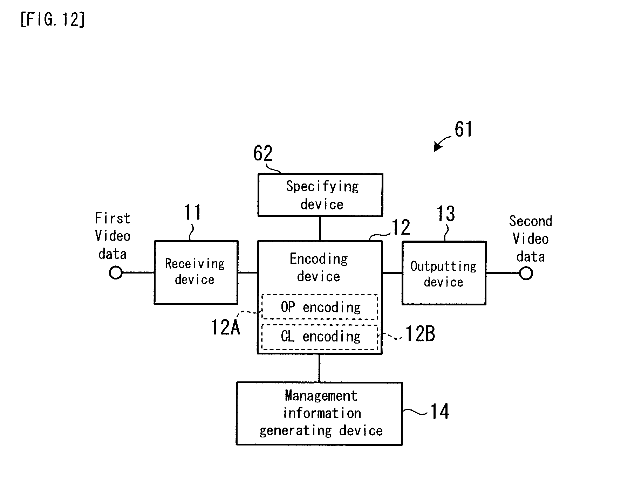

Incidentally, if the space area is clarified in advance in the first layer of the dual-layer recording disk onto which the video data string is dubbed or copied, it is also possible to specify the position, manually, in which the closed GOP is inserted in the middle of the video data string. In this case, instead of the position determining device, a specifying device 62 may be provided, as in an encoding apparatus 61 shown in FIG. 12.

### (Computer Program for Encoding)

The aforementioned first to sixth embodiments of the present invention can be realized by preparing a computer program and making a computer read the computer program, wherein the computer program is adapted to realize the receiving device 11, the encoding device 12, the outputting device 13, and the management information generating device 14.

### (Encoding Method)

An embodiment of the encoding method of the present invention is an encoding method of encoding first video data to thereby generate second video data, the encoding method provided with: (1) a receiving process of receiving the first video data; (2) an encoding process of generating a video data string on the basis of the first video data, the video data string including a plurality of closed GOPs (i.e. independent data groups) and a plurality of open GOPs (i.e. dependent data groups) which are arranged in a predetermined order; and (3) an outputting process of outputting the video data string generated by the encoding process as the second video data, the encoding process generating the video data string to dispose one closed GOP at intervals of one or more open GOPs (refer to FIG. 2).

In the encoding method, it is desirable to generate the video data string to dispose one closed GOP at intervals of about 20 to 120 open GOPs in the encoding process (refer to FIG. 7). Moreover, instead of this, the video data string may be generated in which the closed GOPs are arranged so that the closed GOP includes image data corresponding to video images which are reproduced at about 10 to 60 second intervals when the second video data is reproduced, in the encoding process (refer to FIG. 8).

Even this encoding method allows the achievement of the same advantageous effects as those of the aforementioned encoding apparatus 1.

### (Recording Medium With Video Data string Recorded)

An embodiment of the recording medium of the present invention is a recording medium on which a video data string is recorded, the video data string including a plurality of GOPs (i.e. data groups) which are arranged in a predetermined order, each of the GOPs including a plurality of image data which constitute video data, wherein the plurality of GOPs includes a plurality of closed GOPs (i.e. independent data groups) and a plurality of open GOPs (i.e. dependent data groups), and one closed GOP is disposed at intervals of one or more open GOPs in the video data string (refer to FIG. 2).

On the recording medium, one closed GOP is desirably disposed at intervals of about 20 to 120 open GOPs, in the video data string (refer to FIG. 7). Moreover, instead of this, the closed GOPs may be arranged so that the closed GOP includes image data corresponding to video images which are reproduced at about 10 to 60 second intervals when the second video data is reproduced, in the video data string (refer to FIG. 8).

Even such a recording medium allows the achievement of the same advantageous effects as those of the aforementioned encoding apparatus 1 (refer to FIG. 4 and FIG. 5).

### Example

Hereinafter, an example of the present invention will be explained with reference to the drawings. In the following example, the encoding apparatus and the recording apparatus of the present invention are applied to a DVD recorder with a built-in hard disk drive. This is one preferable example to carry out the present invention.

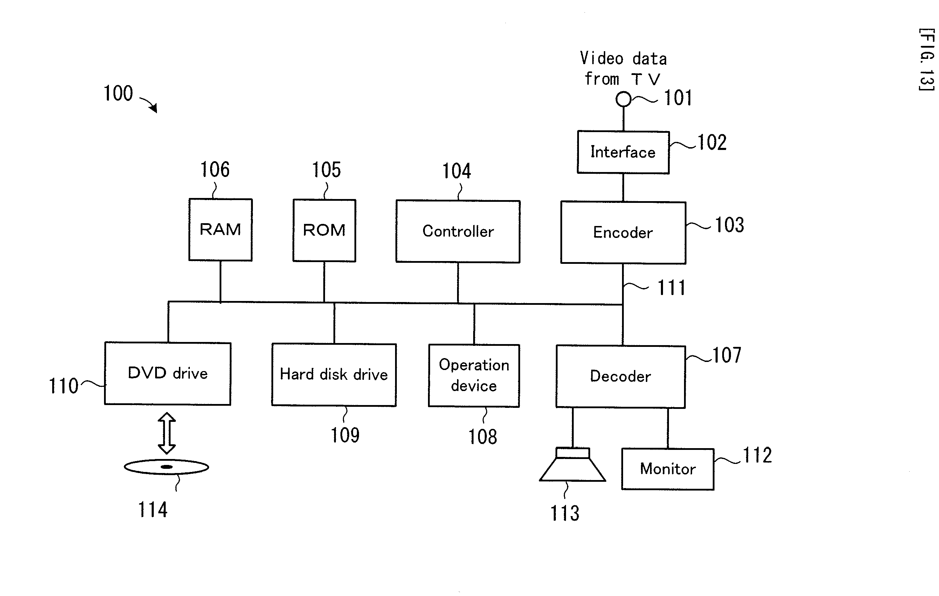

FIG. 13 shows a DVD recorder with a built-in hard disk drive, which is an embodiment of the present invention. Incidentally, the present invention is not limited to the DVD recorder and may be applied to a Blu-ray recorder with a built-in hard disk, and a HD-DVD recorder. As shown in FIG. 13, a DVD recorder 100 is provide with: an input terminal 101; an interface circuit 102; an encoder 103; a controller 104; a ROM 105; a RAM 106; a decoder 107; an operation device 108; a hard disk drive 109; and a DVD drive 110, which are connected to each other through a bus 111. Moreover, a monitor 112 and a speaker 113 are connected to the decoder 107.

Firstly, the following is an operation when the video data transmitted from a television broadcast station or the like is recorded onto a hard disk built in the DVD recorder 100. The video data transmitted from a television broadcast station or the like is inputted to the input terminal 101. The interface circuit 102 receives the video data and outputs it to the encoder 103. The encoder 103 generates a video data string on the basis of the received video data, wherein the video data string includes a plurality of closed GOPs and a plurality of open GOPs which are arranged in a predetermined order. At this time, the encoder 103 generates the video data string to dispose one closed GOP at intervals of one or more open GOPs. The encoder 103 also generates management information indicating a position in which the closed GOP is disposed in the video data string. The video data string and the management information generated by the encoder 103 are supplied to the hard disk drive 109 through the bus 111. The hard disk drive 109 records the video data string and the management information onto the built-in hard disk. Incidentally, the input terminal 101 and the interface circuit 102 are a specific example of the receiving device. The encoder 103 is a specific example of the encoding device and the management information generating device. The bus 111 is a specific example of the outputting device. The hard disk drive 109 is a specific example of the recording device. The built-in hard disk is a specific example of the recording medium.

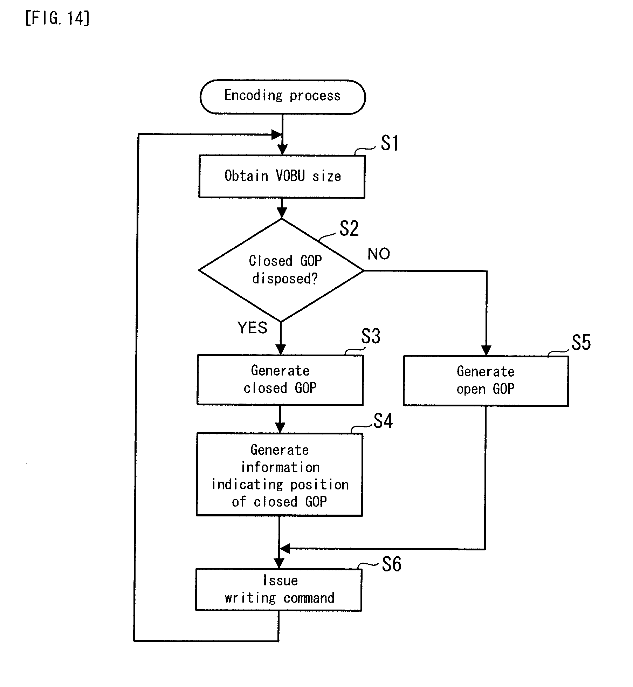

Now, the encoding process by the encoder 103 will be specifically described with reference to FIG. 14. As shown in FIG. 14, the encoding process is performed in each VOBU (refer to the DVD video standard). The encoder 103 obtains the size of a certain VOBU (step S1). Then, the encoder 103 judges whether or not the closed GOP is to be disposed (step S2). When the closed GOP is to be disposed (the step S2: YES), the encoder 103 generates the closed GOP (step S3) and then generates information which indicates the position of the closed GOP (step S4). Then, the encoder 103 issues a writing command (step S6). By this, the closed GOP is disposed into the video data string, and the information which indicates the position of the closed GOP is appended to the management information. On the other hand, in the step S2, when the closed GOP is not to be disposed (the step S2: NO), the encoder 103 generates the open GOP (step S5) and then issues a writing command (the step S6). By this, the open GOP is disposed into the video data string.

Next, the following is an operation when the video data recorded on the built-in hard disk of the hard disk drive 109 is dubbed or copied. Firstly, the hard disk drive 109 reads the management information recorded on the built-in hard disk. Then, the controller 104 examines a space area in the first layer of a dual-layer DVD-R which is inserted on the DVD drive 110. Then, the controller 104 adjusts the correspondence relationship between the video data string and the recording area (i.e. space area) of the dual-layer DVD-R 114. This adjustment is performed, for example, by shifting the recording start position of the head of the video data string backward from the head of the space area in the first layer of the dual-layer DVD-R 114. In other words, the recording start position of the head of the video data string is determined to match one closed GOP, which is located in the middle of the video data string, with the head of the recording area in the second layer of the dual-layer DVD-R. Then, the DVD drive 110 continuously records the video data string from the recording start position determined by the controller 104, throughout the second layer from the first layer of the dual-layer DVD-R 114.

This enables the closed GOP to be recorded at the head of the recording area in the second layer of the dual-layer DVD-R 114. Therefore, even if the layer-change is made when the video data string recorded on the dual-layer DVD-R 114 is decoded (or reproduced), it is possible to achieve quick and complete decoding and it is possible to prevent a lack of one portion of the reproduced video images upon the layer-change. As a result, it is possible to prevent a disturbance of the reproduced video images immediately after the layer-change.

Incidentally, in the present invention, various changes may be made without departing from the essence or spirit of the invention which can be read from the claims and the entire specification. An encoding apparatus, an encoding method, a recording apparatus, and a computer program for encoding, which involve such changes, are also intended to be within the technical scope of the present invention.

### Industrial Applicability

The encoding apparatus, the encoding method, and the computer program for encoding according to the present invention can be applied to an encoding apparatus for encoding video data in accordance with the MPEG standard or the like. Moreover, they can be also applied to an encoding apparatus or the like which is mounted on various computer equipment for consumer use or for commercial use, or which can be connected to various computer equipment.

## Claims

1. An encoding apparatus for encoding first video data to thereby generate second video data, said encoding apparatus comprising:
a receiving device for receiving the first video data;
an encoding device for generating a video data string on the basis of the first video data, the video data string including a plurality of independent data groups and a plurality of dependent data groups which are arranged in a predetermined order, each of the independent data groups having a plurality of image data which do not include image data in which images cannot be reproduced completely without reference to image data included in another data group, each of the dependent data groups having a plurality of image data which include image data in which images cannot be reproduced completely without reference to image data included in another data group; and
an outputting device for outputting the video data string generated by said encoding device as the second video data,
said encoding device generating the video data string to dispose one independent data group at intervals of one or more dependent data groups.

2. The encoding apparatus according to claim 1, wherein said encoding device generates the video data string to dispose one independent data group at intervals of n dependent data groups (n is an integer of 1 or more).

3. The encoding apparatus according to claim 1, wherein said encoding device generates the video data string to dispose one independent data group at intervals of about 20 to 120 dependent data groups

4. The encoding apparatus according to claim 1, wherein said encoding device generates the video data string in which the independent data groups are arranged so that the independent data group includes image data corresponding to video images which are reproduced at about 10 to 60 second intervals when the second video data is reproduced

5. The encoding apparatus according to claim 1, wherein said encoding device generates the video data string in which the independent data groups are arranged so that the independent data group includes image data corresponding to video images which are reproduced at about 300 to 1800 frame intervals when the second video data is reproduced.

6. The encoding apparatus according to claim 1, further comprising a specifying device for specifying a position in which the independent data group is inserted in the video data string.

7. The encoding apparatus according to claim 1, further comprising a position determining device for determining a position in which the independent data group is to be inserted to the video data string, on the basis of a size of a space area in a first layer of a dual-layer recording disk onto which the video data string is dubbed or copied,
said encoding device inserting one of the two independent data groups in a head position of the video data string and inserting the other independent data group in the insertion position determined by said position determining device.

8. The encoding apparatus according to claim 7, wherein said encoding device inserts one of the two independent data groups in the head position of the video data string and inserts the other independent data group in a position corresponding to a head of a second layer of the dual-layer recording disk.

9. The encoding apparatus according to claim 1, wherein said encoding device comprises:
an independent data group generating device for generating the plurality of independent data groups on the basis of the first video data; and
a dependent data group generating device for generating the plurality of dependent data groups on the basis of the first video data.

10. The encoding apparatus according to claim 1, further comprising a management information generating device for generating management information indicating a position in which the independent data group is disposed in the video data string.

11. A computer program for making a computer function as the encoding apparatus according to claim 1.

12. A recording apparatus comprising:
the encoding apparatus according to claim 1; and
a recording device for recording the second video data outputted by said outputting device of the encoding apparatus, onto a recording medium.

13. An encoding method of encoding first video data to thereby generate second video data, said encoding method comprising:
a receiving process of receiving the first video data;
an encoding process of generating a video data string on the basis of the first video data, the video data string including a plurality of independent data groups and a plurality of dependent data groups which are arranged in a predetermined order, each of the independent data groups having a plurality of image data which do not include image data in which images cannot be reproduced completely without reference to image data included in another data group, each of the dependent data groups having a plurality of image data which include image data in which images cannot be reproduced completely without reference to image data included in another data group; and
an outputting process of outputting the video data string generated by said encoding process as the second video data,
said encoding process generating the video data string to dispose one independent data group at intervals of one or more dependent data groups.

14. The encoding method according to claim 13, wherein the video data string is generated to dispose one independent data group at intervals of about 20 to 120 dependent data groups, in said encoding process.

15. The encoding method according to claim 13, wherein the video data string is generated in which the independent data groups are arranged so that the independent data group includes image data corresponding to video images which are reproduced at about 10 to 60 second intervals when the second video data is reproduced, in said encoding process.

16. A recording medium on which a video data string is recorded, the video data string including a plurality of data groups which are arranged in a predetermined order, each of the data groups including a plurality of image data which constitute video data, wherein
the plurality of data groups includes a plurality of independent data groups and a plurality of dependent data groups, each of the independent data groups having a plurality of image data which do not include image data in which images cannot be reproduced completely without reference to image data included in another data group, each of the dependent data groups having a plurality of image data which include image data in which images cannot be reproduced completely without reference to image data included in another data group, and
one independent data group is disposed at intervals of one or more dependent data groups in the video data string.

17. The recording medium according to claim 16, wherein one independent data group is disposed at intervals of about 20 to 120 dependent data groups, in the video data string.

18. The recording medium according to claim 16, wherein the independent data groups are arranged so that the independent data group includes image data corresponding to video images which are reproduced at about 10 to 60 second intervals when the second video data is reproduced, in the video data string.

19. An encoding apparatus for encoding first video data in accordance with a MPEG standard to thereby generate second video data having a plurality of GOPs, said encoding apparatus comprising:
a receiving device for receiving the first video data;
an encoding device for generating a video data string on the basis of the first video data, the video data string including a plurality of closed GOPs and a plurality of open GOPs which are arranged in a predetermined order; and
an outputting device for outputting the video data string generated by said encoding device as the second video data,
said encoding device generating the video data string to dispose one closed GOP at intervals of one or more open GOPs.

20. The encoding apparatus according to claim 19, wherein said encoding device generates the video data string to dispose one closed GOP at intervals of about 20 to 120 open GOPs.

21. The encoding apparatus according to claim 19, wherein said encoding device generates the video data string in which the closed GOPs are arranged so that the closed GOP includes image data corresponding to video images which are reproduced at about 10 to 60 second intervals when the second video data is reproduced

22. The encoding apparatus according to claim 19, further comprising a specifying device for specifying a position in which the closed GOP is inserted in the video data string.

23. The encoding apparatus according to claim 19, further comprising a position determining device for determining a position in which the closed GOP is to be inserted to the video data string, on the basis of a size of a space area in a first layer of a dual-layer recording disk onto which the video data string is dubbed or copied,
said encoding device inserting one of the two closed GOPs in a head position of the video data string and inserting the other closed GOP in the insertion position determined by said position determining device.

24. The encoding apparatus according to claim 23, wherein said encoding device inserts one of the two closed GOPs in the head position of the video data string and inserts the other closed GOP in a position corresponding to a head of a second layer of the dual-layer recording disk.

25. The encoding apparatus according to claim 19, further comprising a management information generating device for generating management information indicating a position in which the closed GOP is disposed in the video data string.

26. A computer program for making a computer function as the encoding apparatus according to claim 19.

27. A recording apparatus comprising:
the encoding apparatus according to claim 19; and
a recording device for recording the second video data outputted by said outputting device of the encoding apparatus, onto a recording medium.

28. An encoding method of encoding first video data in accordance with a MPEG standard to thereby generate second video data having a plurality of GOPs, said encoding method comprising:
a receiving process of receiving the first video data;
an encoding process of generating a video data string on the basis of the first video data, the video data string including a plurality of closed GOPs and a plurality of open GOPs which are arranged in a predetermined order; and
an outputting process of outputting the video data string generated by said encoding process as the second video data,
said encoding process generating the video data string to dispose one closed GOP at intervals of one or more open GOPs.

29. The encoding method according to claim 28, wherein the video data string is generated to dispose one closed GOP at intervals of about 20 to 120 open GOPs, in said encoding process.

30. The encoding method according to claim 28, wherein the video data string is generated in which the closed GOPs are arranged so that the closed GOP includes image data corresponding to video images which are reproduced at about 10 to 60 second intervals when the second video data is reproduced, in said encoding process.

31. A recording medium on which a MPEG video data string is recorded, the video data string including a plurality of GOPs which are arranged in a predetermined order, each of the GOPs including a plurality of image data which constitute video data, wherein
the plurality of GOPs includes a plurality of closed GOPs and a plurality of open GOPs, and
one closed GOP is disposed at intervals of one or more open GOPs in the video data string.

32. The recording medium according to claim 31, wherein one closed GOP is disposed at intervals of about 20 to 120 open GOPs, in the video data string.

33. The recording medium according to claim 31, wherein the closed GOPs are arranged so that the closed GOP includes image data corresponding to video images which are reproduced at about 10 to 60 second intervals when the second video data is reproduced, in the video data string.
